# EUROPEAN PATENT APPLICATION

(11) **EP 4 583 375 A1**
(43) Date of publication of application: **09.07.2025**
(21) Application number: 24155022.7
(22) Date of filing: 31.01.2024
(51) Int. Cl.: H02K 5/173, H02K 7/08, F16C 19/54

(54) **HIGH-SPEED BLDC MOTOR WITH STABLE BEARING STRUCTURE**

(30) Priority: 08.01.2024 CN 202420037517 U
(71) Applicant: China Drive Motors (Shenzhen) Co., Ltd., Shenzhen, Guangdong 518000 (CN)
(72) Inventor: ZHONG, Pingxian, Shenzhen, Guangdong Province 518000 (CN); LI, Guofeng, Shenzhen, Guangdong Province 518000 (CN); KUANG, Gangyao, Shenzhen, Guangdong Province 518000 (CN)
(74) Representative: Ipside

(57) **Abstract**

The present invention discloses a high-speed BLDC motor with a stable bearing structure, including a stator assembly, a rotor assembly, a rotating shaft and a bearing member, where the bearing member includes a first bearing and a second bearing, the first bearing includes a first bearing inner ring and a first bearing outer ring, the second bearing includes a second bearing inner ring and a second bearing outer ring, two end faces of a shaft sleeve are in contact with end faces of the first bearing inner ring and the second bearing inner ring respectively, and adhesives are provided on contact surfaces of the first bearing inner ring and the second bearing inner ring with the rotating shaft. A spring is replaced with a metal shaft sleeve, and the adhesives are provided between the bearing inner rings and the rotating shaft, thereby solving the technical problem of shortening of the service life of the BLDC motor due to nonuniform stress on steel balls of the bearings due to relative eccentricity of the bearings due to machining errors of the end faces when the spring is assembled between two bearing assemblies.

## Description

### Technical Field

The present invention relates to the field of BLDC motors, in particular to a high-speed BLDC motor with a stable bearing structure.

### Background of the Invention

A BLDC motor is an electromagnetic device for converting or transmitting electric energy according to the law of electromagnetic induction. The BLDC motor generally includes a housing, a stator assembly, a rotor assembly and a rotating shaft, and the rotor assembly rotates relative to the stator assembly by means of the rotating shaft. The rotational friction force is usually reduced by means of a bearing member, currently, the specific bearing member used by the BLDC motor is such that a spring is mounted between two bearing assemblies, and the pre-tightening force is applied to two bearing outer rings by means of the compression force of the spring. Due to the low machining precision of end faces of the spring, two bearings are prone to deviation in actual situations, which easily causes nonuniform stress on steel balls of the bearings at the speed of 110,000-150,000 rpm, causes fatigue failure after long-term (2,000 h) operation, accelerates the abrasion of a bearing track, and affects the service life of the BLDC motor.

### Summary of the Invention

In order to overcome the defects and shortcomings in the prior art, the present invention provides a high-speed BLDC motor with a stable bearing structure, which solves the technical problem of shortening of the service life of a BLDC motor due to nonuniform stress on steel balls of bearings due to relative eccentricity of the bearings due to machining errors of end faces when a spring is assembled between two bearing assemblies in the existing high-speed BLDC motor technology.

In order to achieve the above purpose, the present invention is achieved by the following technical solution: the high-speed BLDC motor with the stable bearing structure comprises a stator assembly, a rotor assembly, a rotating shaft, a bearing member and a shaft sleeve, where the bearing member comprises a first bearing and a second bearing, the first bearing comprises a first bearing inner ring and a first bearing outer ring, the second bearing comprises a second bearing inner ring and a second bearing outer ring, two end faces of the shaft sleeve are in contact with end faces of the first bearing inner ring and the second bearing inner ring respectively, and adhesives are provided on contact surfaces of the first bearing inner ring and the second bearing inner ring with the rotating shaft.

Preferably, the first bearing and the second bearing are provided on the same side of the rotor assembly.

Preferably, the first bearing outer ring has a displacement of 0.01-0.015 mm relative to the first bearing inner ring, and the second bearing outer ring has a displacement of 0.01-0.015 mm relative to the second bearing inner ring.

Preferably, a distance between the first bearing outer ring and the second bearing outer ring is 0.02-0.03 mm shorter than a distance between the first bearing inner ring and the second bearing inner ring.

Preferably, the bearing member is provided in a bearing chamber, and the bearing chamber is provided with a boss for applying a support force to the bearing member.

Preferably, the boss has a thickness of 0.2-1 mm.

Preferably, the high-speed BLDC motor further comprises a housing, where an end face of the housing is provided with ventilation grooves.

Preferably, each of the ventilation grooves has a diameter of 1-5 mm.

Preferably, the shaft sleeve is made of metal.

Compared with the prior art, the present invention has the beneficial effects as follows:
the high-speed BLDC motor with the stable bearing structure disclosed in the present invention comprises the stator assembly, the rotor assembly, the rotating shaft and the bearing member, where the bearing member comprises the first bearing and the second bearing, the first bearing comprises the first bearing inner ring and the first bearing outer ring, the second bearing comprises the second bearing inner ring and the second bearing outer ring, the two end faces of the shaft sleeve are in contact with the end faces of the first bearing inner ring and the second bearing inner ring respectively, and the adhesives are provided on the contact surfaces of the first bearing inner ring and the second bearing inner ring with the rotating shaft; the spring is replaced with the metal shaft sleeve, and the adhesives are provided between the bearing inner rings and the rotating shaft, thereby solving the technical problem of shortening of the service life of the BLDC motor due to nonuniform stress on steel balls of the bearings due to relative eccentricity of the bearings due to machining errors of the end faces when the spring is assembled between two bearing assemblies, and achieving the beneficial effects of convenience in mounting, low requirement and capability of prolonging the service life of the BLDC motor;
the bearing member is provided in the bearing chamber, and a contact portion of the bearing chamber with end portions of outer rings of the bearing member is provided with the boss, thereby eliminating the risk of falling of the bearings that may be caused by the failure of the adhesives, and achieving the beneficial effect of further prolonging the service life of the BLDC motor;
the external force is applied to the bearing outer rings during mounting, such that the bearing outer rings have certain displacements relative to the bearing inner rings, the technical problem of errors caused by bearing clearances is solved, and the beneficial effects of achieving uniform stress on the steel balls of the bearings, avoiding the fatigue failure after long-term operation and further prolonging the service life of the BLDC motor are achieved; and
the end face of the housing is provided with the ventilation grooves, such that when the BLDC motor operates, air inside the housing flows, the technical problem that the operating temperature rises due to heat accumulation of the stator assembly of the BLDC motor is solved, and the beneficial effects of achieving self-cooling of the BLDC motor and further prolonging the service life of the BLDC motor are achieved.

### Brief description of the Drawings

In order to explain embodiments of the present invention or technical solutions in the prior art more clearly, drawings needed in descriptions of the embodiments or the prior art will be briefly introduced below.
FIG. 1 shows a sectional view of a high-speed BLDC motor with a stable bearing structure in the present invention.
FIG. 2 shows a schematic diagram of ventilation grooves in a housing of the high-speed BLDC motor with the stable bearing structure in the present invention.
FIG. 3 shows a schematic diagram of a boss of the high-speed BLDC motor with the stable bearing structure in the present invention.

Reference numerals: 1-stator assembly; 2-rotor assembly; 3-rotating shaft; 4-bearing member; 41-first bearing; 411-first bearing inner ring; 412-first bearing outer ring; 42-second bearing; 421-second bearing inner ring; 422-second bearing outer ring; 5-shaft sleeve; 6-bearing chamber; 61-boss; 7-housing; and 71-ventilation groove.

### Detailed Description of Embodiments

The present invention is further explained in conjunction with the drawings of the specification and particular embodiments below. However, the described embodiments are merely part of embodiments of the present invention, not all of them. On the basis of the embodiments of the present invention, all other embodiments obtained by those of ordinary skill in the art without involving any inventive effort should fall within the scope of protection of the present invention.

### Embodiment 1

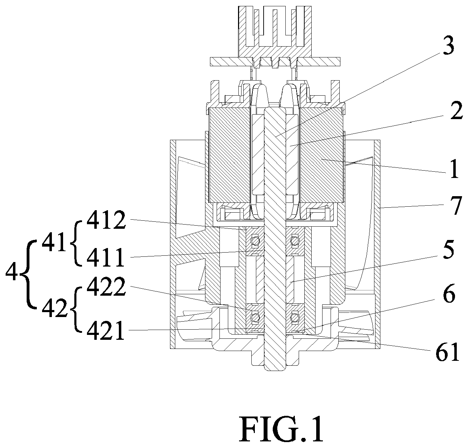

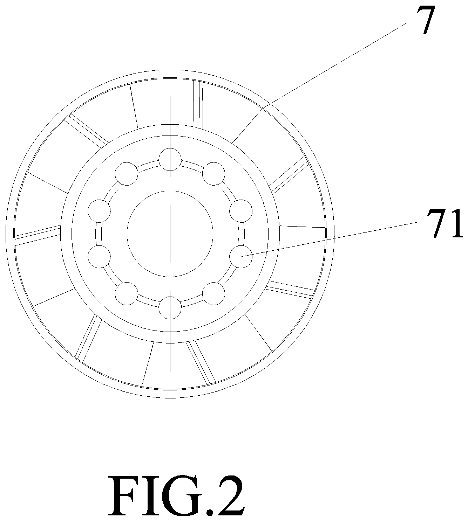

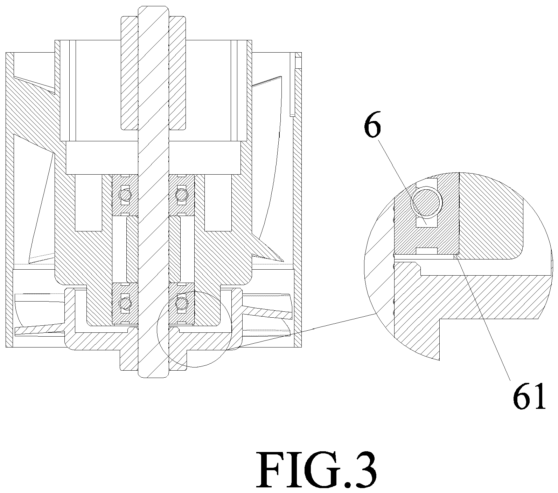

Reference is made to FIGS. 1-3. A high-speed BLDC motor with a stable bearing structure includes a stator assembly 1, a rotor assembly 2, a rotating shaft 3, a bearing member 4, a shaft sleeve 5 and a housing 7, where the bearing member 4 includes a first bearing 41 and a second bearing 42, the first bearing 41 includes a first bearing inner ring 411 and a first bearing outer ring 412, the second bearing 42 includes a second bearing inner ring 421 and a second bearing outer ring 422, two end faces of the shaft sleeve 5 are in contact with end faces of the first bearing inner ring 411 and the second bearing inner ring 421 respectively, adhesives are provided on contact surfaces of the first bearing inner ring 411 and the second bearing inner ring 421 with the rotating shaft 3, the first bearing 41 and the second bearing 42 are provided on the same side of the rotor assembly 2, and an external force is applied to the outer rings of the bearing member during mounting such that the outer rings and the inner rings have certain displacements; the bearing member 4 is provided in a bearing chamber 6, the bearing chamber 6 is provided with a boss 61 for applying a support force to the bearing member 4, and the boss 61 is attached to end portions of the outer rings of the bearing member 4; an end face of the housing 7 is provided with ventilation grooves 71, and the ventilation grooves 71 are circularly arranged and uniformly distributed along an end portion of the housing 7; and the shaft sleeve 5 is made of metal.

Further, the first bearing outer ring 412 has a displacement of 0.01 mm relative to the first bearing inner ring 411, the second bearing outer ring 422 has a displacement of 0.01 mm relative to the second bearing inner ring 421, and a distance between the first bearing outer ring 412 and the second bearing outer ring 422 is 0.02 mm shorter than a distance between the first bearing inner ring 411 and the second bearing inner ring 421.

Further, the boss 61 has a thickness of 0.2 mm.

Further, each of the ventilation grooves 71 has a diameter of 1 mm.

### Embodiment 2

Reference is made to FIGS. 1-3. A high-speed BLDC motor with a stable bearing structure includes a stator assembly 1, a rotor assembly 2, a rotating shaft 3, a bearing member 4, a shaft sleeve 5 and a housing 7, where the bearing member 4 includes a first bearing 41 and a second bearing 42, the first bearing 41 includes a first bearing inner ring 411 and a first bearing outer ring 412, the second bearing 42 includes a second bearing inner ring 421 and a second bearing outer ring 422, two end faces of the shaft sleeve 5 are in contact with end faces of the first bearing inner ring 411 and the second bearing inner ring 421 respectively, adhesives are provided on contact surfaces of the first bearing inner ring 411 and the second bearing inner ring 421 with the rotating shaft 3, the first bearing 41 and the second bearing 42 are provided on the same side of the rotor assembly 2, and an external force is applied to the outer rings of the bearing member during mounting such that the outer rings and the inner rings have certain displacements; the bearing member 4 is provided in a bearing chamber 6, the bearing chamber 6 is provided with a boss 61 for applying a support force to the bearing member 4, and the boss 61 is attached to end portions of the outer rings of the bearing member 4; an end face of the housing 7 is provided with ventilation grooves 71, and the ventilation grooves 71 are circularly arranged and uniformly distributed along an end portion of the housing 7; and the shaft sleeve 5 is made of metal.

Further, the first bearing outer ring 412 has a displacement of 0.015 mm relative to the first bearing inner ring 411, the second bearing outer ring 422 has a displacement of 0.015 mm relative to the second bearing inner ring 421, and a distance between the first bearing outer ring 412 and the second bearing outer ring 422 is 0.03 mm shorter than a distance between the first bearing inner ring 411 and the second bearing inner ring 421.

Further, the boss 61 has a thickness of 1 mm.

Further, each of the ventilation grooves 71 has a diameter of 5 mm.

The embodiments listed above are merely particular embodiments of the present invention. Obviously, the present invention is not limited to the above embodiments, and there may be many similar modifications. All transformations that would have been directly derived from or associated with the content disclosed herein by those of ordinary skill in the art should be considered to fall within the scope of protection of the present invention.

## Claims

1. A high-speed BLDC motor with a stable bearing structure, **characterized by** comprising a stator assembly (1), a rotor assembly (2), a rotating shaft (3), a bearing member (4) and a shaft sleeve (5), wherein the bearing member (4) comprises a first bearing (41) and a second bearing (42), the first bearing (41) comprises a first bearing inner ring (411) and a first bearing outer ring (412), the second bearing (42) comprises a second bearing inner ring (421) and a second bearing outer ring (422), and two end faces of the shaft sleeve (5) are in contact with end faces of the first bearing inner ring (411) and the second bearing inner ring (421) respectively.

2. The high-speed BLDC motor with a stable bearing structure according to claim 1, **characterized in that** the first bearing (41) and the second bearing (42) are provided on the same side of the rotor assembly (2).

3. The high-speed BLDC motor with a stable bearing structure according to claim 1, **characterized in that** the first bearing outer ring (412) has a displacement of 0.01-0.015 mm relative to the first bearing inner ring (411), and the second bearing outer ring (422) has a displacement of 0.01-0.015 mm relative to the second bearing inner ring (421).

4. The high-speed BLDC motor with a stable bearing structure according to claim 3, **characterized in that** a distance between the first bearing outer ring (412) and the second bearing outer ring (422) is 0.02-0.03 mm shorter than a distance between the first bearing inner ring (411) and the second bearing inner ring (421).

5. The high-speed BLDC motor with a stable bearing structure according to claim 1, **characterized in that** the bearing member (4) is provided in a bearing chamber (6), and the bearing chamber (6) is provided with a boss (61) for applying a support force to the bearing member (4).

6. The high-speed BLDC motor with a stable bearing structure according to claim 5, **characterized in that** the boss (61) has a thickness of 0.2-1 mm.

7. The high-speed BLDC motor with a stable bearing structure according to claim 1, **characterized by** further comprising a housing (7), wherein an end face of the housing (7) is provided with ventilation grooves (71).

8. The high-speed BLDC motor with a stable bearing structure according to claim 7, **characterized in that** each of the ventilation grooves (71) has a diameter of 1-5 mm.

9. The high-speed BLDC motor with a stable bearing structure according to claim 1, **characterized in that** the shaft sleeve (5) is made of metal.
